# EUROPEAN PATENT SPECIFICATION

(11) **EP 3 114 970 B1**
(45) Date of publication and mention of the grant of the patent: **21.11.2018**
(21) Application number: 16178489.7
(22) Date of filing: 07.07.2016
(51) Int. Cl.: A47J 31/06

(54) **CAPSULE-HOLDER AND MACHINE FOR THE PREPARATION OF INFUSED BEVERAGES**
KAPSELHALTERUNG UND MASCHINE ZUR HERSTELLUNG VON AUFGUSSGETRÄNKEN
SUPPORT DE CAPSULE ET MACHINE DE PRÉPARATION DE BOISSONS INFUSÉES

(30) Priority: 10.07.2015 IT UB20152060
(43) Date of publication of application: 11.01.2017
(73) Proprietor: Capitani S.r.l., 22070 Solbiate (CO) (IT)
(72) Inventor: CAPITANI, Gionata, 22070 Solbiate, COMO (IT)
(74) Representative: Parisi, Luigi

(56) References cited:
- WO-A1-2015/024798
- WO-A1-2015/101557
- US-A1- 2013 055 905

## Description

This invention relates to a capsule-holder element, and a machine for the production of an infused beverage comprising such element. Examples of such machines can be WO2015/024798 or US2013/0055905.

There are known and increasingly widespread, electric coffee machines working with capsules, which can be equipped with an automatic system for discharging the used capsules, or that are equipped with removable capsule-holders for the manual discharge of such capsules.

For the second type of machine (usually more economical than the first type), there are problems related to the direction of insertion of the capsule in the respective capsule-holder, and mainly due to the direction of flow of the hot water inside the capsule itself.

More precisely, according to the main embodiments present on the market, a truncated-conical capsule can be designed so that the hot water enters from the minor base or from the major base of the truncated cone.

It follows that the related machines - and more precisely the related capsule-holders - are designed to function properly with only one type of proprietary capsule.

The purpose of this invention is to offer a capsule-holder element able to overcome such a drawback, and in particular to provide an element capable to operate satisfactorily, from the point of view of the taste of the generated beverage, with both capsule embodiments.

This purpose is achieved with a capsule-holder element according to claim 1, and with a machine for the preparation of infused beverages according to claim 9.
The dependent claims describe advantageous or preferred embodiments of the invention.

The characteristics and advantages of the invention will, in any case, be evident from the following description of its preferred embodiments, provided by way of non-limiting example, with reference to the accompanying figures, in which:

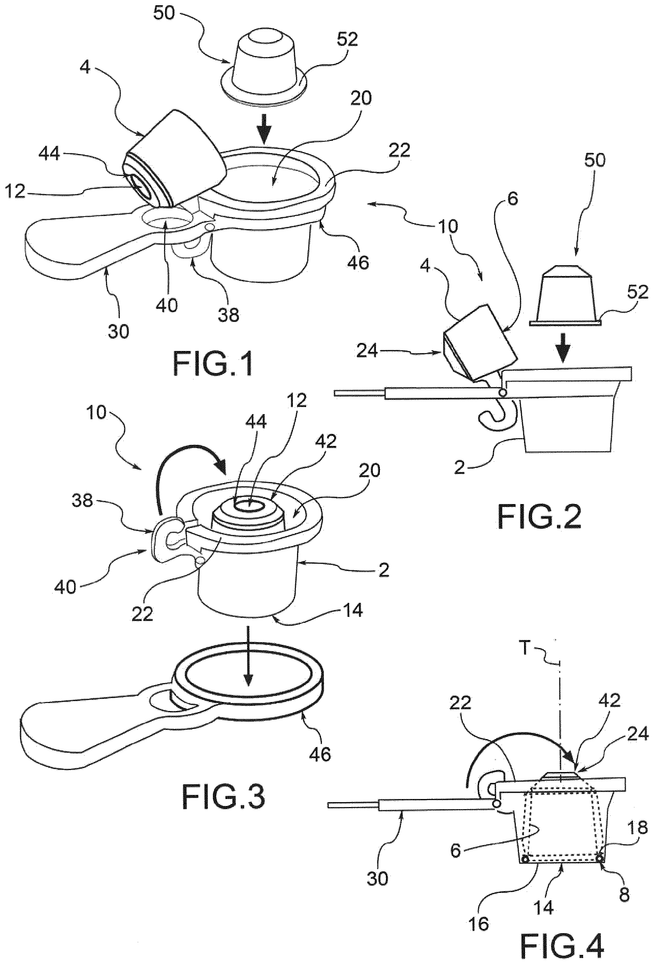

- Figures 1 and 2 and Figures 3 and 4 illustrate in pairs a perspective view and a side view of a capsule-holder element according to the invention, wherein the second body is placed, respectively, in an access configuration and in an infusion configuration, and wherein Figure 3 is an exploded view of the pair of bodies with respect to the handle;

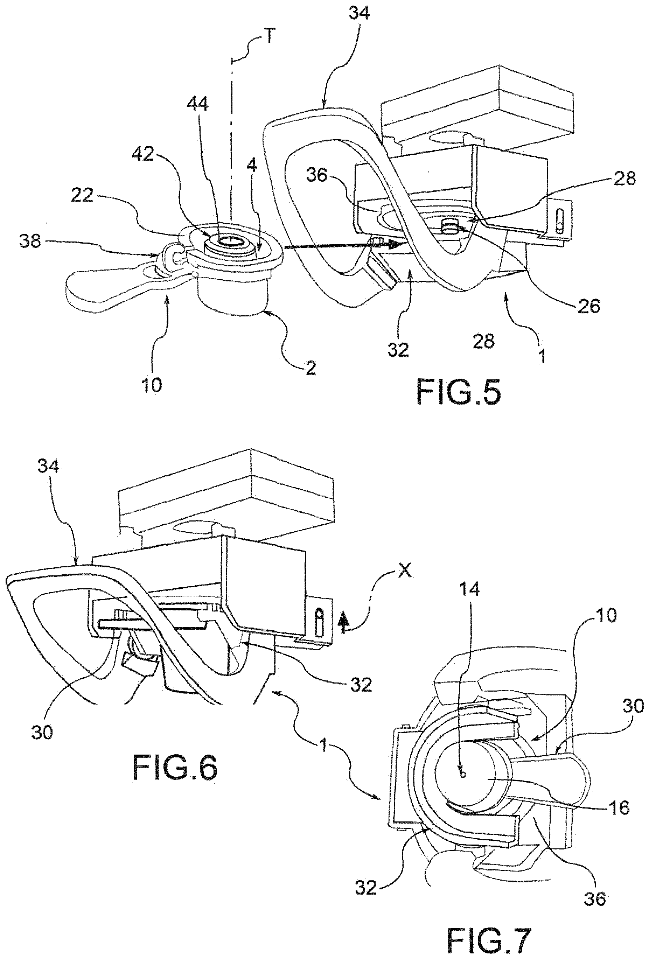

- Figures 5, 6 and 7 show in side and bottom perspective views, part of a machine for the preparation of an infused beverage according to the invention, according to a possible variant, in the association of the capsule-holder element to the machine and in an operating configuration for the production of an infused beverage.

In the above-mentioned figures, reference number 10 identifies, in its entirety, a capsule-holder element associable to a machine 1 for the production of infused beverages.

The elements of the machine 1 used for the production of the infused beverage are of known type and do not require a detailed description herein.

As here concerns the description of the invention, the machine 1 comprises a male connector 28 for the pressurised infuser liquid, through which the liquid flows inside the capsule-holder element 10.

The capsule-holder element 10 comprises at least a first 2 and a second 4 body which jointly circumscribe a housing compartment 6 for a capsule 50 containing an aromatic substance (for example coffee). Preferably, the housing compartment 6 is pressurisable.

According to an advantageous variant, the housing compartment 6 is of a shape substantially complementary to the capsule, for example of truncated-conical or cylindrical shape.

According to an embodiment, the second body 4 internally delimits at least part of the housing compartment, and externally delimits at least part of cover of the said element 10.

In the variant shown in the figures, the element 10 could comprise a gripping handle 30, which extends from the first or second body, to put the capsule-holder in correspondence of the machine element 1 or to remove it from that machine.

Preferably, the gripping handle 30 is connectable to one of the bodies 2, 4 with a releasable coupling, for example of the snap type, so that housing compartments 6 of various type are associable to this handle (for example from a geometric or dimensional point of view), depending on the contingencies or the type of capsule to be used with the machine.

In the embodiment shown in Figure 3, the handle comprises a (semi-)annular portion 46 that at least partly encircles one of the bodies, and more precisely the first body 2 in the variants illustrated.

According to this variant, one of the bodies is thus insertable into the (semi-)annular portion for a releasable connection to the handle 30.

At least one of the bodies 2, 4 is mobile or articulated in relation to the other between an access configuration (shown in Figure 1) to said compartment 6, and an infusion configuration (Figure 4) in which said bodies 2, 4 lie reciprocally in abutment.

It follows that, in the access configuration, the bodies are spaced apart, in particular so as to allow a user to withdraw a used capsule from the compartment 6, or to put in this compartment a new capsule to be infused.

In the embodiments shown, the two bodies 2, 4 are hinged to each other. According to a variant, although hinged, the bodies may be mutually divisible.

According to a non illustrated embodiment, the two bodies could be independent or separate from each other, and be associated with each other to reach the infusion configuration.

In order to promote the movement of the movable body (for example the second body 4 in the figures) between the above configurations, the latter could comprise a handling appendage or portion 38. For example, this portion 38 may be movable through a through-recess 40 delimited by the gripping handle 30.

In addition, the element 10 comprises at least a first sealing element 8, interposed between the bodies 2, 4 when these latter lie in the infusion configuration. In this configuration, the first sealing element 8 is preferably placed at a projecting annular rim 52 of the capsule 50, so as to pinch it elastically.

According to a further preferred variant, the sealing element 8 extends in an approximately radial direction with respect to an extension axis T.

The element 10 then comprises an input opening 12 of an infuser liquid (for example water), and an output opening 14 of an infused beverage (for example coffee), fluidically connected to the housing compartment 6 and delimited by one or both of said bodies.

According to the invention, the capsule-holder element also comprises a female connector 42, through which the infuser liquid passes to the input opening 12 and that defines an inner surface 44 engageable by a male connector 28 of said machine to seal on a second sealing element 26 compressible exclusively by said inner surface 44.

Therefore, when the capsule-holder element 10 is associated with the machine 1, the housing compartment 6 is sealingly connected to said male connector 28 in a releasable way, more precisely through the compression of the inner surface 44 on the second sealing element.

According to a non illustrated embodiment, one of the bodies (and preferably the body defining the input opening 12) could be connected to the male connector 28, for example in a stable manner. According to this variant, therefore, only the other body (namely the one associated to the capsule 50) would be brought near to the machine 1, for abutment with the other body in the infusion configuration.

Merely by way of example, a support element 32 of the machine 1 to which the capsule-holder element 10 is connectable could be moved by means of an actuating member 34 of the machine 1 (for example a lever, in the direction of the arrow X in Figure 6), in order to perform the connection between the male connector 28 and the female connector 42, or in the opposite direction to release the element 10 from the machine.

In this regard, the male connector 28 could externally define a sealing seat onto which the second sealing element 26 is fitted so as to make the latter integral with the male connector.

According to an advantageous variant, the inner surface 44 could extend in a substantially tubular manner around the extension axis T.

According to a further variant, the second sealing element 26 could abut the inner surface 44 and the sealing seat of the male connector only in a plane transverse to said axis T.

According to a particularly preferred variant, the housing compartment 6 is pressurisable through the input opening 12, at a pressure value sufficiently high to perforate the capsule 50 and allow the infused beverage to the exit.

Preferably, at least one of the bodies 2,4 could be provided with one or more perforating points of the capsule 50, protruding in the housing compartment 6. It follows that, according to this variant, the perforation of the capsule does not occur by means of a mere hydraulic force, exerted through the connector 28 that feeds the input opening 12, but through a mechanical force that cooperates with the hydraulic force.

Advantageously, the perforating point (or the plurality thereof) could be of the filtering type.

According to a further variant, the capsule-holder element 10 could comprise a valve member (not shown), fluidically downstream of the housing compartment, to adjust the pressure inside that compartment.

According to an embodiment, at least one 4 of the bodies is in the form of a receptacle substantially complementary to at least part of the capsule 50, where the other body 2 comprises an end wall 16 which in the infusion configuration overlaps at least in part an input opening 18 to the receptacle, in this way sealingly occluding the housing compartment 6.

In the embodiment shown in the figures, this receptacle is of truncated cone shape, in which the major base surface of this shape is facing vertically downwards. In this regard, see the dotted outline of the second body 4 in Figure 4.

In the embodiments shown, both bodies 2,4 are in receptacle form. According to this variant, the first body 2 could define an inner compartment 20 of sufficient cross-section and volume to accommodate the second body 4 in a prevalent manner.

Preferably, the first body 2 defines an annular abutment surface 22 with the machine 1, lowered in relation to a summit 24 of the second body 4 so as to allow a partial compression of the mentioned second sealing element 26.

Therefore, when the annular abutment surface 22 comes in abutment with an opposing abutment surface 36 of the machine 1, an end-stroke is reached. In this position, the second sealing element 26 is compressed so as to ensure a reliable seal.

Advantageously, the input opening 12 of the infuser liquid and the output opening 14 of the infused beverage are each delimited by a different body, and are preferably mutually aligned along the extension axis T.

According to a particularly advantageous variant, the transit section of the input opening 12 is tapered in the direction of the housing compartment 6 to increase the flow speed of the infuser liquid through said compartment.

Innovatively, as evident from the above description, the capsule-holder element of this invention is usable indifferently with a plurality of different proprietary capsules, without the taste of the infused beverage being poor.

Advantageously, the capsule-holder element of this invention works efficiently with only the aid of the fluid pressure.

Advantageously, the capsule-holder element of this invention is constructively simple and reliable.

Advantageously, the capsule-holder element described allows ensuring a seal with the machine even in the presence of high internal pressures, since the described lateral sealing set-up allows a certain play between the bodies without losing the seal.

To the forms of embodiment of the of the capsule-holder element or the machine according to the invention, a skilled person, to satisfy contingent requirements, may make modifications, adaptations and replacements of elements with others functionally equivalent, without departing from the scope of the following claims.

In addition, each of the features described as belonging to a possible embodiment can be performed independently from the other embodiments described.

## Claims

1. Capsule-holder element (10), associable to a machine (1) for the production of infused beverages, comprising:
- at least a first (2) and a second (4) body which jointly circumscribe a pressurisable housing compartment (6) for a capsule (50) containing an aromatic substance, one of said bodies (2; 4) being mobile or articulated in relation to the other between an access configuration to said compartment (6), and an infusion configuration in which said bodies (2, 4) lie reciprocally in abutment; - at least a first sealing element (8), interposed between said bodies (2, 4) in the infusion configuration; at least one (4) of said bodies is in the form of a receptacle substantially complementary to at least part of said capsule (50), and wherein the other body (2) comprises an end wall (16) which in the infusion configuration overlaps at least in part an input opening (18) to said receptacle;
- said receptacle is a truncated cone shape, in which the larger base area of said shape is facing vertically downwards;
- an input opening (12) of an infusion liquid and an output opening (14) of an infused beverage, fluidically connected to the housing compartment (6) and delimited by one or both of said bodies (2, 4);
- a female connector (42), through which the infuser liquid passes to the input opening (12) and defining an inner surface (44) engageable by a male connector (28) of said machine to seal on a second sealing element (26) compressible exclusively by said inner surface (44).

2. Element according to the previous claim, wherein the female surface (42) extends in a tubular manner around an extension axis (T), and wherein the second sealing element (26) abuts with the inner surface (44) and a sealing seat of the male connector exclusively in a plane transversal to said axis (T).

3. Element according to any of the previous claims, wherein a gripping handle (30) with releasable coupling, such as a snap-on type, is connectable to one of the bodies (2, 4) so that housing compartments (6) of different kinds are attachable to said handle.

4. Element according to any of the previous claims, wherein both bodies (2, 4) are in the form of a receptacle, the first body (2) defining an inner compartment (20) of sufficient cross-section and volume to accommodate the second body (4) in a prevalent manner.

5. Element according to the previous claim, wherein the first body (2) defines an annular abutment surface (22) with the machine (1), lowered in relation to a summit (24) of the second body (4) so as to allow a partial compression of the second sealing element (26).

6. Element according to any of the claims, wherein the input opening (12) of the infusion liquid and the output opening (14) of the infused beverage are each delimited by a different body, and are mutually aligned along the extension axis (T).

7. Element according to any of the previous claims, wherein, in the infusion configuration, the first sealing element (8) is positioned at a projecting annular rim (52) of the capsule (50), so as to pinch it elastically.

8. Element according to any of the previous claims, wherein the cross-section of the input opening (12) is tapered in the direction of the housing compartment (6) to increase the flow speed of the infusion fluid through said compartment.

9. Machine (1) for making an infused beverage with a male connector (28) for the pressurised infusion liquid, and a capsule-holder element (10) according to any of the previous claims, delimiting a housing compartment (6) sealingly connected to said connector in a releasable manner.

10. Machine according to the previous claim, wherein the male connector (28) externally defines a sealing seat onto which the second sealing element (26) is fitted so as to make the latter integral with the male connector.

11. Machine according to claim 9 or 10, wherein the body (4) delimiting the input opening (12) is connected to the male connector (28), for example permanently, and wherein the other body (2) associated with the capsule (50) is movable towards the machine (1) for abutment with the other body (4) in the infusion configuration.

## Patentansprüche

1. Kapselhalter-Element (10), welches einer Maschine (1) zur Herstellung von aufgegossenen Getränken zugeordnet werden kann, umfassend:
- mindestens einen ersten (2) und einen zweiten (4) Körper, die gemeinsam ein druckbeaufschlagbares Gehäusefach (6) für eine Kapsel (50) umgeben, welche eine aromatische Substanz enthält, wobei einer der Körper (2; 4) in Bezug auf den anderen zwischen einer Zugangskonfiguration zum Fach (6) und einer Aufgusskonfiguration, in welcher die Körper (2, 4) gegenseitig aneinander anliegen, beweglich oder schwenkbar ist;
- mindestens ein zwischen den Körpern (2, 4) in der Aufgusskonfiguration angeordnetes, erstes Dichtelement (8); wobei mindestens einer der Körper (4) die Form eines zumindest einem Teil der Kapsel (50) komplementären Behälters aufweist, und wobei der andere Körper (2) eine Stirnwand (16) aufweist, welche in der Aufgusskonfiguration zumindest teilweise eine Eingangsöffnung (18) zum Behälter überlagert;
- wobei der Behälter kegelstumpfförmig ist, wobei die größere Grundfläche dieser Form vertikal nach unten weist;
- eine Eingangsöffnung (12) für eine Aufgussflüssigkeit und eine Ausgangsöffnung (14) für ein aufgegossenes Getränk, fluidisch mit dem Gehäusefach (6) verbunden und durch einen oder beide Körper (2, 4) begrenzt;
- eine Steckerbuchse (42), durch welche die Aufgussflüssigkeit zur Eingangsöffnung (12) gelangt und welche eine Innenfläche (44) definiert, welche mit einem Stecker (28) der Maschine in Eingriff gebracht werden kann, um mit einem ausschließlich durch die Innenfläche (44) zusammendrückbaren, zweiten Dichtelement (26) abzudichten.

2. Element gemäß dem vorhergehenden Anspruch, wobei sich die Buchsenfläche (42) röhrenförmig um eine Längsachse (T) herum erstreckt, und wobei das zweite Dichtelement (26) an der Innenfläche (44) und einem Dichtsitz des Steckers ausschließlich in einer zur Achse (T) transversalen Ebene anliegt.

3. Element gemäß einem der vorhergehenden Ansprüche, wobei ein Handgriff (30) mittels lösbarer Verbindung, beispielsweise nach der Art eines Schnappverschlusses, mit einem der Körper (2, 4) verbindbar ist, so dass unterschiedliche Arten von Gehäusefächern (6) am Griff angebracht werden können.

4. Element gemäß einem der vorhergehenden Ansprüche, wobei beide Körper (2, 4) in Form eines Behälters vorliegen, wobei der erste Körper (2) ein Innenfach (20) mit ausreichendem Querschnitt und Volumen zur überwiegenden Aufnahme des zweiten Körpers (4) definiert.

5. Element gemäß dem vorhergehenden Anspruch, wobei der erste Körper (2) eine ringförmige Anlagefläche (22) zur Maschine (1) definiert, welche bezüglich einer Spitze (24) des zweiten Körpers (4) abgesenkt ist, um ein partielles Zusammendrücken des zweiten Dichtelements (26) zu ermöglichen.

6. Element gemäß irgendeinem der Ansprüche, wobei die Eingangsöffnung (12) für die Aufgussflüssigkeit und die Ausgangsöffnung (14) für das aufgegossene Getränk jeweils durch einen anderen Körper begrenzt sind und miteinander entlang der Längsachse (T) fluchten.

7. Element gemäß einem der vorhergehenden Ansprüche, wobei in der Aufgusskonfiguration das erste Dichtelement (8) an einem vorstehenden, ringförmigen Rand (52) der Kapsel (50) positioniert ist, um es elastisch zusammenzudrücken.

8. Element gemäß einem der vorhergehenden Ansprüche, wobei der Querschnitt der Eingangsöffnung (12) in Richtung auf das Gehäusefach (6) verjüngt ist, um die Strömungsgeschwindigkeit der Aufgussflüssigkeit durch das Fach zu erhöhen.

9. Maschine (1) zum Herstellen eines aufgegossenen Getränks, mit einem Stecker (28) für die druckbeaufschlagte Aufgussflüssigkeit und einem Kapselhalter-Element (10) gemäß einem der vorhergehenden Ansprüche, welches ein mit dem Stecker abdichtend auf lösbare Weise verbundenes Gehäusefach (6) begrenzt.

10. Maschine gemäß dem vorhergehenden Anspruch, wobei der Stecker (28) außen einen Dichtsitz definiert, auf welchen das zweite Dichtelement (26) so aufgesetzt ist, dass letzteres ein integraler Bestandteil des Steckers ist.

11. Maschine gemäß Anspruch 9 oder 10, wobei der die Eingangsöffnung (12) begrenzende Körper (4) mit dem Stecker (28), beispielsweise dauerhaft, verbunden ist und wobei der der Kapsel (50) zugeordnete, andere Körper (2) in Richtung auf die Maschine (1) bewegbar ist, um in der Aufgusskonfiguration am anderen Körper (4) anzuliegen.

## Revendications

1. Élément porte-capsule (10), pouvant être associé à une machine (1) pour la production de boissons infusées, comprenant :
- au moins un premier corps (2) et un second corps (4) qui entourent conjointement un compartiment de logement pressurisable (6) pour une capsule (50) contenant une substance aromatique, l'un desdits corps (2 ; 4) étant mobile ou articulé par rapport à l'autre entre une configuration d'accès audit compartiment (6), et une configuration d'infusion dans laquelle lesdits corps (2, 4) reposent réciproquement en butée ;
- au moins un premier élément d'étanchéité (8), placé entre lesdits corps (2, 4) dans la configuration d'infusion ; au moins l'un (4) desdits corps est sous forme d'un réceptacle sensiblement complémentaire à au moins une partie de ladite capsule (50), et dans lequel l'autre corps (2) comprend une paroi d'extrémité (16) qui dans la configuration d'infusion chevauche au moins une partie d'une ouverture d'entrée (18) audit réceptacle ;
- ledit réceptacle présente une forme de cône tronqué, dans lequel la plus grande zone de base de ladite forme est orientée verticalement vers le bas ;
- une ouverture d'entrée (12) d'un liquide d'infusion et une ouverture de sortie (14) d'une boisson infusée, reliées à fluide au compartiment de logement (6) et délimitées par l'un desdits corps (2, 4) ou les deux ;
- un raccord femelle (42), à travers lequel le liquide d'infusion passe jusqu'à l'ouverture d'entrée (12) et définissant une surface interne (44) pouvant être mise en prise par un raccord mâle (28) de ladite machine pour assurer une étanchéité sur un second élément d'étanchéité (26) pouvant être uniquement comprimé par ladite surface interne (44).

2. Élément selon la revendication précédente, dans lequel la surface femelle (42) s'étend de manière tubulaire autour d'un axe d'extension (T), et dans lequel le second élément d'étanchéité (26) vient en butée contre la surface interne (44) et un siège d'étanchéité du raccord mâle uniquement dans un plan transversal audit axe (T).

3. Élément selon l'une quelconque des revendications précédentes, dans lequel une poignée de préhension (30) avec un couplage libérable, par exemple du type encliquetable, peut être liée à l'un des corps (2, 4) de sorte que des compartiments de logement (6) de différentes sortes peuvent être fixés à ladite poignée.

4. Élément selon l'une quelconque des revendications précédentes, dans lequel les deux corps (2, 4) sont sous la forme d'un réceptacle, le premier corps (2) définissant un compartiment interne (20) d'une section transversale et d'un volume suffisants pour loger le second corps (4) de façon prédominante.

5. Élément selon la revendication précédente, dans lequel le premier corps (2) définit une surface de butée annulaire (22) avec la machine (1), abaissée par rapport à un sommet (24) du second corps (4) afin de permettre une compression partielle du second élément d'étanchéité (26).

6. Élément selon l'une quelconque des revendications, dans lequel l'ouverture d'entrée (12) du liquide d'infusion et l'ouverture de sortie (14) de la boisson infusée sont chacune délimitées par un corps différent, et sont alignées mutuellement le long de l'axe d'extension (T).

7. Élément selon l'une quelconque des revendications précédentes, dans lequel, dans la configuration d'infusion, le premier élément d'étanchéité (8) est positionné au niveau d'un rebord annulaire saillant (52) de la capsule (50), afin de la pincer élastiquement.

8. Élément selon l'une quelconque des revendications précédentes, dans lequel la section transversale de l'ouverture d'entrée (12) est effilée dans la direction du compartiment de logement (6) pour accroître un débit du fluide d'infusion à travers ledit compartiment.

9. Machine (1) pour préparer une boisson infusée avec un raccord mâle (28) pour le liquide d'infusion sous pression, et un élément porte-capsule (10) selon l'une quelconque des revendications précédentes, délimitant un compartiment de logement (6) raccordé de manière étanche audit raccord de manière libérable.

10. Machine selon la revendication précédente, dans laquelle le raccord mâle (28) définit extérieurement un siège d'étanchéité sur lequel le second élément d'étanchéité (26) est ajusté afin de rendre ce dernier solidaire du raccord mâle.

11. Machine selon la revendication 9 ou 10, dans laquelle le corps (4) délimitant l'ouverture d'entrée (12) est raccordé au raccord mâle (28), par exemple de manière permanente, et dans laquelle l'autre corps (2) associé à la capsule (50) est mobile vers la machine (1) pour venir en butée avec l'autre corps (4) dans la configuration d'infusion.
